# EUROPEAN PATENT SPECIFICATION

(11) **EP 2 724 999 B1**
(45) Date of publication and mention of the grant of the patent: **27.05.2020**
(21) Application number: 13190112.6
(22) Date of filing: 24.10.2013
(51) Int. Cl.: C04B 41/48

(54) **Method and system for consolidating slabs of stone material**
Verfahren und System zum Verfestigen von Natursteinplatten
Procédé et système de consolidation de plaques en pierre naturelle

(30) Priority: 25.10.2012 IT TO20120940
(43) Date of publication of application: 30.04.2014
(73) Proprietor: Antolini Luigi & C. S.p.A., 37015 Sant' Ambrogio di Valpolicella (IT)
(72) Inventor: Lunardi, Mauro, 37015 SANT'AMBROGIO DI VALPOLICELLA (VR) (IT)
(74) Representative: Robba, Pierpaolo

(56) References cited:
- US-A1- 2008 206 466

## Description

### Technical field

The present invention relates to a method for consolidating slabs of stone material.

More particularly the invention relates to a method for consolidating slabs of stone material, for instance marble, stone or granite, by impregnation of the slab with hardenable resin.

### Prior art

In the field of stone working it is known to impregnate the slab with hardenable synthetic resin.

The most common methods currently used for impregnating slabs of stone material provide the following steps:
- drying of the slabs to be consolidated, for example within a furnace, to evaporate the water contained on the material and in the fractures;
- inserting the packed slabs vertically into a formwork;
- inserting the formwork into an autoclave;
- applying vacuum inside the autoclave;
- injecting the resin into the formwork until the slabs are covered; in this step the resin penetrates into the material emptied of air;
- applying an overpressure to push the resin into the fractures;
- restoring the atmospheric pressure;
- hardening the resin-impregnated slabs within a furnace: the furnace can be separated from or integrated in the autoclave.

This method has the drawback that it cannot be used for uneven slabs, and it requires that the slabs be squared before being vertically inserted into the formwork.

The method most commonly used is that of applying the resin in a single slab line, which comprises the steps of:
- drying the slabs to be consolidated within a furnace;
- applying, for example by spraying, the hardenable resin to the slab placed on a horizontal plane;
- introducing the slab into an autoclave;
- applying vacuum inside the autoclave to push the resin into the cracks of the slab;
- restoring the atmospheric pressure;
- catalyzing the impregnating resin within a furnace.

This process has the limitation that it does not completely consolidate the cracks in the slab; in fact the vacuum cycle, that is applied after the application of the hardenable resin to the slab plane, has only a superficial and aesthetic effect, but it fails to consolidate deeper fractures.

US 2008/0206466 discloses a system and a method for impregnating slabs of stone material that allow consolidation of slabs with inhomogeneous size by overlapping them so as to form a multilayer block, which is enveloped with restraint sheets, without squaring of the slabs.

Methods for impregnating overlapped slabs of stone material with inhomogeneous size that have not previously been squared, generally have the disadvantage that, because of the non-perfect planarity of the slabs, there is no homogeneous diffusion of the resin on the entire surface of the slab, thus leaving free-of-resin and unhealed zones inside the slabs.

It is an object of the invention to provide a method for consolidating slabs of stone material which does not have the drawbacks of the prior art and which can be industrially applicable at limited costs.

### Summary of the Invention

The above and other objects are achieved by the method and the system as claimed in the appended claims.

According to the invention, the method for consolidating slabs of stone material with hardenable resin comprising the step of horizontally placing on a platform a plurality of mutually overlapping slabs to be consolidated, has the advantage that, not having to arrange the slabs vertically, it can be applied to slabs of very inhomogeneous size and in conditions of total safety.

Moreover, thanks to the use of an envelope flexible to the sequence of steps of the method according to the invention, the consumption of excess resin is reduced to a minimum, with considerable cost saving with respect to the prior art.

### Brief Description of the Figures

A preferred embodiment of the method according to the invention will be described with reference to the accompanying drawings, in which:

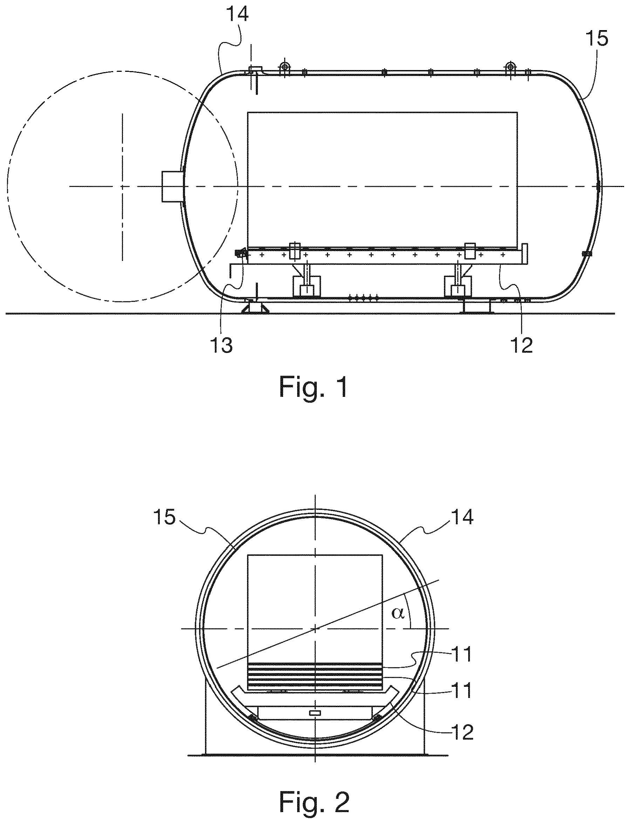

- Fig. 1 shows a side view of a system used in the method according to the invention;
- Fig. 2 shows a front view of a system used in the method according to the invention; and
- Fig. 3 shows a variant embodiment of the method according to the invention.

### Description of a Preferred Embodiment

With reference to the accompanying drawings, the method for consolidating slabs 11 of stone material according to the invention provides that, after the known cutting and washing steps, the slabs to be consolidated, possibly selected, for example if only some of them should be healed, are arranged stacked on a platform, so as to form a set of overlapping slabs that can be placed either horizontally or vertically; spacers, for example rods, are arranged between the slabs in order to prevent the slabs from coming into contact during the transport and possible storage.

Afterwards, the set of vertically or horizontally packed slabs is transferred to a drying station, in which the slabs are dried by means of heaters known in the field, such as a furnace, in order to eliminate humidity or residual water.

Subsequently, the method according to the invention provides a preparation step in which the slabs to be consolidated are taken one by one with known means, for example a manipulator, and placed horizontally on a platform 12 and overlapping one another, with a separating material having interposed between them, as will be explained in more detail below; preferably, the platform 12 is equipped with rollers or wheels so that it can be transferred to a following station by sliding on a floor or on appropriate guides.

In this step, layers of separation material according to two different embodiments are inserted between one slab and the other, for example to form a distribution mesh.

In a first embodiment, a thin net (for example made of glass fiber, kevlar or carbon), having warp and weft of substantially equal thickness, is applied on each side of the slab; a perforated plastic sheet, a layer of thicker net, or distributor, and a sheet of detaching material, which allows the separation of the slabs after impregnation with the resin, are superimposed to the thin net.

The overlapping layers of thin net, perforated plastic sheet, and thicker net allow the passage of the resin during the impregnation, allowing it to penetrate into the cracks of the slab.

In a second embodiment, a special net (for example made of glass fiber, kevlar or carbon), having warp and weft of different thickness and a sheet of detaching material, is applied on the sides of the slab; the special net, having the warp and weft of different thickness, defines channels for the passage of resin or infusion channels that allow the resin to come into contact with the slab in order to heal it.

In the following step the set of horizontally stacked slabs is bundled or bagged, wrapping the set with a sheet of flexible material, such as nylon, multilayer polyolefin, fluoropolymer, polyimide, polyamide blend, or other thermoplastic elastomer, which is then sealed, for example with mastic, to the platform 12, so as to achieve an impermeable envelope 16 that has the platform 12 as its base and with the slabs enclosed in its inside.

Preferably the platform is made of metal, for example steel or aluminum, and is equipped with first ducts 13 which are connected to an apparatus known in the field and adapted to mix the resin and to inject it under pressure and through which the resin is injected, and second ducts 18 through which the air is sucked from the envelope 16.

Preferably, the first ducts 13 and the second ducts 18 are provided near two opposite sides of the platform 12.

The envelope 16 containing the set of slabs is then placed in a vacuum chamber or autoclave 14 maintaining the slabs inclined by an angle α with respect to a horizontal plane.

The inclination is obtained by means of a pivoting ribbed structure 15 which is connected to the platform 12 and rotates inside the autoclave 14 by sliding on guide means, and which allows to tilt the slabs with respect to a horizontal plane by an angle α of 20°.

Preferably, the set of slabs is inclined with respect to a horizontal plane by an angle α of 6° or 7°.

The set of slabs 11 is maintained inclined during all phases of the method that are carried out inside the autoclave 14, so that the first ducts 13 and the second ducts 18 are located at two different heights with respect to a horizontal plane.

At this point of the method for consolidating slabs, there is the starting of the impregnation of the set of slabs, the slabs 11 being enclosed in the envelope 16 and positioned inclined by an angle α inside the autoclave 14; the impregnation takes place in a series of subsequent steps, which occur in the following order:
- a vacuum step in which vacuum conditions, e.g. at a pressure of -1 bar, are created within the envelope 16 by means of a vacuum pump, which sucks the air from the second ducts 18 provided in the platform 12; in this step the pressure in the autoclave, at the outside of the casing 16, is the atmospheric pressure and the air is sucked from the second ducts 18 that are at a greater height, when the platform 12 is inclined by the angle α with respect to the horizontal plane;
- a first step of resin injection into the envelope 16 containing said plurality of slabs 11, which is maintained inclined; in this step the resin penetrates among the slabs and into the fractures due to the vacuum that is maintained constant, within the envelope 16, during the first step of resin injection.

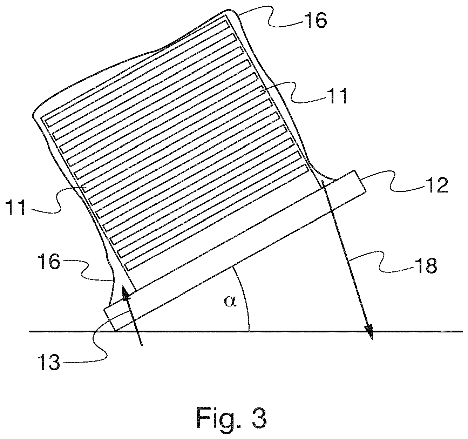

Preferably the resin is injected through the first ducts 13 that are located in the part of the platform 12 which is at a lower height than the second ducts 18, as shown in Fig 3, while the air is sucked from the second ducts 18 that are at a height greater than the first ducts 13, when the platform 12 is inclined by the angle α; in particular in the first step of resin injection into the envelope 16, thanks to the inclination of the platform 12 with respect to the horizontal plane, the first ducts 13 are placed at a height lower than that of the pack of slabs 11 and therefore the resin is injected at a level or height lower than that of the slab pack 11.

In particular in the first step of resin injection into the envelope 16, the resin is injected at a lower height than the height at which the air is sucked through the second ducts 18.

More preferably in the first step of resin injection in the envelope 16, the resin is injected into a zone that is under the pack of slabs 11.

Preferably in the first step of resin injection, the injection of the resin into the envelope 16 and the air suction of the vacuum pump take place simultaneously.
- a second step of resin injection into the envelope 16, wherein the envelope or bag is put under pressure in the autoclave, e.g. at a pressure of -1 bar, and the resin is injected into the envelope 16 at a pressure higher than the pressure existing in the autoclave: in this step the flexible envelope 16 is inflated;
- a step in which injection of the resin is interrupted, and the envelope 16 is brought under vacuum again, e.g. to a pressure of -1 bar; simultaneously to the interruption of the resin injection, the pressure in the autoclave, outside the envelope 16, is brought to a value higher than the pressure value inside the envelope 16 containing the slabs 11, e.g. to a pressure of 1.5 - 2 bar, with a difference of 2.5 - 3 bar with respect to the vacuum (i.e. -1 bar) which is created inside the envelope 16.

This cycle of impregnation of the slabs, arranged inclined inside the autoclave 14, is repeated twice, restarting from the vacuum step in which the pressure is brought to -1 bar inside the envelope 16, while the pressure within the autoclave, outside the envelope 16, is brought to 1 bar; preferably the cycle can be repeated more than twice; the succession of the vacuum and increased pressure steps creates a piston effect that compresses the resin into the cracks of the material to be healed and allows the slabs to absorb a greater amount of resin.

Once the steps of slabs impregnation are finished, a step of restoration of the conditions of atmospheric pressure in the autoclave 14 starts; a vacuum condition exists instead inside the envelope 16; afterwards the envelope with the set of slabs 11 and the platform 12 are extracted from the autoclave 14 and subjected to the step of hardening of the resin, preferably performed in a furnace, with the interior of the envelope that remains under vacuum.

The furnace can be integrated in the autoclave 14: in this case the resin hardening occurs before extracting the pack of slabs from the autoclave, and the drying step described above, in which the slabs are dried, also takes place inside the autoclave, and it follows, rather than preceding it, the preparation step in which the slabs are taken one by one and placed horizontally on the platform 12.

After the step of hardening of the resin, the set of slabs 11 is removed from the furnace, and is trimmed by cutting the slabs, so as to remove the envelope that surrounds the slabs; afterwards the slabs are separated from one other.

In the embodiment in which the separating material includes a sheet of detaching material, the envelope is removed without the need to trim the slabs.

Advantageously, thanks to this method, an optimal healing of the slab is obtained due to the deep and thorough impregnation of the resin into the cracks and fissures.

Advantageously in the system and method of the invention the resin, being injected into the envelope 16 through the first ducts 13 placed at a lower height than the second ducts 18 from which the air is sucked, goes up in the envelope 16 at a speed adapted to obtain a complete and homogeneous infusion of the slabs.

Actually, the slabs are cut with machines that are not able to guarantee that the whole slab is planar and has a constant thickness, and also by horizontally overlapping the slabs the differences in thickness are not compensated, whereby zones are left in which adjacent slabs are not in mutual contact.

In the step in which the pack of horizontally overlapping slabs is put under vacuum the slabs, due to their own weight and to the action of the vacuum, are compacted in the zones in contact while leaving voids in the zones with different thickness.

Zones where voids between the slabs are created are very difficult to infuse with the pack of slabs in a horizontal position, because the resin takes different speeds depending on the ease of infusion and does not infuse zones that are isolated and with probable presence of air inside them, thus causing a partial infusion of the pack of slabs, with the peripheries of the slabs infused and the central parts not infused.

Advantageously, by infusing the pack of slabs according to the method and system of the invention, the flow of resin infusion is much more uniform across the whole pack slabs and is manageable, by adjusting the level of vacuum and forcing the infusion to be uniform, and by using the channels or zones of infusion provided and realized with distribution meshes, which are located between the slabs and superimposed over their whole surface.

Moreover, always thanks to the invention it is advantageously possible to impregnate slabs of stone material in order to achieve a complete impregnation and healing at a greatly reduced cost thanks to the low consumption of excess resin.

## Claims

1. Method for consolidating slabs of stone material by impregnation of the slabs with hardenable resin, comprising the steps of:
- horizontally placing on a platform (12) a plurality of mutually overlapping slabs (11) to be consolidated, a separating material being interposed between said slabs (11), said platform comprising first ducts (13) for resin injection and second ducts (18) for air suction;
- enveloping said plurality of overlapping slabs (11) with a sheet of flexible and waterproof material, realizing an impermeable envelope (16);
- placing said impermeable envelope (16), containing said plurality of slabs (11), in a vacuum chamber (14), the slabs (11) and the platform (12) being inclined with respect to a horizontal plane by means of a pivoting structure (15), connected to the platform (12) and adapted to rotate inside the vacuum chamber (14) by sliding on guide means, for tilting the slabs (11) and the platform (12) by an angle α with respect to a horizontal plane so that the first ducts (13) are at a lower height than the second ducts (18);
- creating the vacuum inside the casing (16) by sucking the air from the second ducts (18);
- injecting under vacuum the hardenable resin into the envelope (16) through the first ducts (13), for impregnating said plurality of slabs (11);
- causing hardening of the resin.

2. Method according to claim 1, wherein said step of injecting under vacuum the hardenable resin into the envelope (16) comprises:
- a step in which vacuum is created inside the envelope (16);
- a first step of resin injection into the envelope (16) containing said plurality of slabs (11);
- a second step of resin injection into the envelope (16), wherein the envelope (16) is put under pressure in the vacuum chamber (14), and the resin is injected at a pressure higher than the pressure existing inside the vacuum chamber (14) at the outside of the envelope (16);
- a step in which injection of the resin is interrupted, the envelope (16) is brought under vacuum again, and the pressure in the vacuum chamber (14), outside the envelope (16), is brought to a value higher than the pressure value inside the envelope (16) containing the slabs (11).

3. Method according to claim 2, wherein said step in which vacuum is created inside the envelope (16), said first step of resin injection into the envelope (16), said second step of resin injection into the envelope (16) and said step in which the injection of the resin is interrupted are cyclically repeated at least twice.

4. Method according to any of the preceding claims, wherein said slabs (11) and said platform (12) are inclined with respect to a horizontal plane by an angle (α) of 20°.

5. Method according to any of the claims 1 to 3, wherein said slabs (11) and said platform (12) are inclined with respect to a horizontal plane by an angle (α) of 6° or 7°.

6. System for consolidating slabs of stone material by impregnation of the slabs with hardenable resin, comprising:
- a platform (12) comprising first ducts (13) for resin injection and second ducts (18) for air suction;
- a sheet of flexible and waterproof material, adapted to be sealed to the platform (12) to make an envelope (16) having the platform (12) as its base, for containing a pack of slabs (11) ;
- a separating material adapted to separate the slabs (11);
- a vacuum chamber (14) adapted to contain said envelope (16) with said slabs (11);
- a pivoting structure (15), connected to the platform (12) and adapted to rotate inside the vacuum chamber (14) by sliding on guide means, for tilting the slabs (11) and the platform (12) by an angle α with respect to a horizontal plane so that the first ducts (13) are at a lower height than the second ducts (18).

7. System according to claim 6, wherein the first ducts (13) and the second ducts (18) are provided near two opposite sides of the platform (12).

8. System according to any of claims 6 or 7, wherein said separating material comprises a detaching material.

9. System according to claim 8, wherein said separating material comprises a first net having warp and weft of substantially equal thickness, to which a perforated plastic sheet and a second net having a thickness greater than that of the first net are superimposed.

10. System according to claim 8, wherein said separating material comprises a special net having warp and weft of different thickness and applied on the sides of the slab (11) .

## Patentansprüche

1. Verfahren zum Verfestigen von Steinplatten durch Tränken der Platten mit einem aushärtbaren Harz, mit den Schritten:
- horizontales Anordnen von mehreren zu verfestigenden Platten (11) übereinander auf einer Plattform (12), wobei ein Trennmaterial zwischen die Platten (11) gelegt wird und die Plattform erste Kanäle (13) zum Einspritzen von Harz und zweite Kanäle (18) zum Absaugen von Luft aufweist,
- Einhüllen der mehreren sich bedeckenden Platten (11) mit einem Blatt aus flexiblem und wasserfestem Material, Bilden einer undurchlässigen Umhüllung (16),
- Platzieren der undurchlässigen Umhüllung (16), welche die Platten (11) enthält, in einer Unterdruckkammer (14), wobei die Platten (11) und die Plattform (12) relativ zu einer horizontalen Ebene mittels einer schwenkbaren Struktur (15) geneigt werden, die mit der Plattform (12) verbunden und dafür ausgelegt ist, sich in der Unterdruckkammer (14) zu drehen, indem sie auf Führungsmitteln gleitet, um die Platten (11) und die Plattform (12) um einen Winkel α in Bezug auf eine horizontale Ebene zu neigen, so dass die ersten Kanäle (13) auf einer niedrigeren Höhe sind als die zweiten Kanäle (18),
Erzeugen von Unterdruck in dem Gehäuse (16) durch Absaugen der Luft aus den zweiten Kanälen (18),
- Einspritzen des aushärtbaren Harzes unter Unterdruck in die Umhüllung (16) durch die ersten Kanäle (13), um die Platten (13) zu tränken,
- Aushärten des Harzes.

2. Verfahren nach Anspruch 1, wobei der Schritt des Einspritzens des aushärtbaren Harzes in die Umhüllung (16) unter Unterdruck aufweist:
- einen Schritt, in dem Unterdruck in der Umhüllung (16) erzeugt wird,
- einen ersten Schritt der Harzeinspritzung in die Umhüllung (16), welche die Platten (11) enthält,
- einen zweiten Schritt der Harzeinspritzung in die Umhüllung (16), wobei die Umhüllung (16) in der Unterdruckkammer (14) unter Druck gesetzt wird und das Harz mit einem Druck eingespritzt wird, der höher ist als der Druck, der in der Unterdruckkammer (14) an der Außenseite der Umhüllung (16) herrscht,
- einen Schritt, in dem das Einspritzen des Harzes unterbrochen wird, die Umhüllung (16) wieder Unterdruck ausgesetzt wird und der Druck in der Unterdruckkammer (14), außerhalb der Umhüllung (16) auf einen Wert gebracht wird, der höher als der Druckwert in der Umhüllung (16) ist, welche die Platten (11) enthält.

3. Verfahren nach Anspruch 2, wobei der Schritt, in dem innerhalb der Umhüllung (16) Unterdruck erzeugt wird, der erste Schritt der Harzeinspritzung in die Umhüllung (16), der zweite Schritt der Harzeinspritzung in die Umhüllung (16) und der Schritt, in dem das Einspritzen des Harzes unterbrochen wird, zyklisch wenigstens zwei Mal wiederholt werden.

4. Verfahren nach einem der vorstehenden Ansprüche, wobei die Platten (11) und die Plattform (12) in Bezug auf eine horizontale Ebene um einen Winkel (α) von 20° geneigt werden.

5. Verfahren nach einem der Ansprüche 1 bis 3, wobei die Platten (11) und die Plattform (12) in Bezug auf eine horizontale Ebene um einen Winkel (α) von 6° oder 7° geneigt werden.

6. System zum Verfestigen von Steinplatten durch Tränken der Platten mit einem aushärtbaren Harz, mit:
- einer Plattform, die erste Kanäle (13) zum Einspritzen von Harz und zweite Kanäle (18) zum Ansaugen von Luft aufweist,
- einem Blatt aus flexiblem und wasserfestem Material, das dafür ausgelegt ist, dichtend an der Plattform (12) befestigt zu werden, um eine Umhüllung (16), deren Basis die Plattform (12) ist, zum Beinhalten eines Stapels von Patten (11) zu bilden,
- einem Trennmaterial, das dafür ausgelegt ist, die Platten (11) zu trennen,
- einer Unterdruckkammer (14), die dafür ausgelegt ist, die Umhüllung (16) mit den Platten (11) aufzunehmen,
- einer schwenkbaren Struktur (15), die mit der Plattform verbunden (12) und dafür ausgelegt ist, sich in der Unterdruckkammer (14) zu drehen, indem sie auf Führungsmitteln gleitet, um die Platten (11) und die Plattform (12) um einen Winkel α in Bezug auf eine horizontale Ebene zu neigen, so dass die ersten Kanäle (13) auf einer niedrigeren Höhe sind als die zweiten Kanäle (18).

7. System nach Anspruch 6, wobei die ersten Kanäle (13) und die zweiten Kanäle (18) in der Nähe von zwei gegenüberliegenden Seiten der Plattform (12) angeordnet sind.

8. System nach einem der Ansprüche 6 oder 7, wobei das Trennmaterial ein ablösendes Material enthält.

9. System nach Anspruch 8, wobei das ablösende Material ein erstes Netz enthält, das Kett- und Schußfäden von im Wesentlichen gleicher Stärke aufweist und auf dem eine perforierte Kunststofffolie und ein zweites Netz, das eine größere Dicke als das erste Netz aufweist, liegen.

10. System nach Anspruch 8, wobei das Trennmaterial ein spezielles Netz enthält, das Kett- und Schußfäden von unterschiedlicher Stärke aufweist und auf die Seiten der Platte (11) aufgebracht wird.

## Revendications

1. Procédé pour consolider des dalles de matière rocheuse par imprégnation des dalles avec une résine durcissable, comprenant les étapes consistant à :
- placer horizontalement sur une plateforme (12) une pluralité de dalles (11) mutuellement chevauchantes à consolider, une matière de séparation étant interposée entre lesdites dalles (11), ladite plateforme comprenant des premiers conduits (13) pour l'injection de résine et des seconds conduits (18) pour l'aspiration d'air ;
- envelopper ladite pluralité de dalles (11) chevauchantes avec une feuille de matière flexible et étanche à l'eau, pour ainsi réaliser une enveloppe imperméable (16) ;
- placer ladite enveloppe imperméable (16), contenant ladite pluralité de dalles (11), dans une chambre à vide (14), les dalles (11) et la plate-forme (12) étant inclinées vis-à-vis d'un plan horizontal au moyen d'une structure pivotante (15), raccordée à la plateforme (12) et adaptée pour tourner à l'intérieur de la chambre à vide (14) en coulissant sur des moyens de guidage, pour incliner les dalles (11) et la plateforme (12) d'un angle α vis-à-vis d'un plan horizontal de sorte que les premier conduits (13) se trouvent à une hauteur inférieure aux seconds conduits (18)
- créer le vide à l'intérieur du boîtier (16) par aspiration de l'air à partir des seconds conduits (18) ;
- injecter sous vide la résine durcissable dans l'enveloppe (16) à travers les premiers conduits (13), pour imprégner ladite pluralité de dalles (11) ;
- provoquer un durcissement de la résine.

2. Procédé selon la revendication 1, dans lequel ladite étape consistant à injecter sous vide de la résine durcissable dans l'enveloppe (16) comprend :
- une étape dans laquelle un vide est créé à l'intérieur de l'enveloppe (16) ;
- une première étape d'injection de résine dans l'enveloppe (16) contenant ladite pluralité de dalles (11) ;
- une seconde étape d'injection de résine dans l'enveloppe (16), dans laquelle l'enveloppe (16) est mise sous pression dans la chambre à vide (14), et la résine est injectée à une pression supérieure à la pression existant à l'intérieur de la chambre à vide (14) à l'extérieur de l'enveloppe (16) ;
- une étape dans laquelle l'injection de la résine est interrompue, l'enveloppe (16) est à nouveau mise sous vide, et la pression dans la chambre à vide (14), à l'extérieur de l'enveloppe (16), est amenée à une valeur supérieure à la valeur de pression à l'intérieur de l'enveloppe (16) contenant les dalles (11).

3. Procédé selon la revendication 2, dans lequel ladite étape dans laquelle un vide est créé à l'intérieur de l'enveloppe (16), ladite première étape d'injection de résine dans l'enveloppe (16), ladite seconde étape d'injection de résine dans l'enveloppe (16) et ladite étape dans laquelle l'injection de la résine est interrompue sont répétées de manière cyclique au moins deux fois.

4. Procédé selon l'une quelconque des revendications précédentes, dans lequel lesdites dalles (11) et ladite plateforme (12) sont inclinées vis-à-vis d'un plan horizontal d'un angle (α) d'environ 20 °.

5. Procédé selon l'une quelconque des revendications 1 à 3, dans lequel lesdites dalles (11) et ladite plateforme (12) sont inclinées vis-à-vis d'un plan horizontal d'un angle (α) de 6 ° ou 7 °.

6. Système pour consolider des dalles de matière rocheuse par imprégnation des dalles avec une résine durcissable, comprenant :
- une plateforme (12) comprenant des premiers conduits (13) pour l'injection de résine et des seconds conduits (18) pour l'aspiration d'air ;
- une feuille de matière flexible et étanche à l'eau, adaptée à être scellée sur la plateforme (12) pour constituer une enveloppe (16) ayant la plateforme (12) comme base, pour contenir un bloc de dalles (11) ;
- une matière de séparation adaptée pour séparer les dalles (11) ;
- une chambre à vide (14) adaptée pour contenir ladite enveloppe (16) avec lesdites dalles (11) ;
- une structure pivotante (15), raccordée à la plateforme (12) et adaptée pour tourner à l'intérieur de la chambre à vide (14) en coulissant sur des moyens de guidage, pour incliner les dalles (11) et la plateforme (12) d'un angle α vis-à-vis d'un plan horizontal de sorte que les premiers conduits (13) se trouvent à une hauteur inférieure aux seconds conduits (18).

7. Système selon la revendication 6, dans lequel les premiers conduits (13) et les seconds conduits (18) sont prévus à proximité de deux côtés opposés de la plateforme (12) .

8. Système selon l'une quelconque des revendications 6 ou 7, dans lequel ladite matière de séparation comprend une matière de détachement.

9. Système selon la revendication 8, dans lequel ladite matière de séparation comprend un premier filet ayant une chaîne et une trame d'épaisseur sensiblement égale, sur lequel une feuille en plastique perforée et un second filet ayant une épaisseur supérieure à celle du premier filet sont superposés.

10. Système selon la revendication 8, dans lequel ladite matière de séparation comprend un filet spécial ayant une chaîne et une trame d'épaisseur différente et appliqué sur les côtés de la dalle (11).
